(19) Europäisches Patentamt
European Patent Office
Office européen des brevets

(11) Publication number: **0 333 457 B1**

(12) # EUROPEAN PATENT SPECIFICATION

(45) Date of publication of patent specification: **02.02.94**

(51) Int. Cl.$^5$: **C08L 77/00**, C08K 5/03, C08K 13/02

(21) Application number: **89302557.7**

(22) Date of filing: **15.03.89**

(54) **Flame-resistant polyamide resin compositions.**

(30) Priority: **15.03.88 JP 59270/88**
**27.07.88 JP 187825/88**
**27.07.88 JP 187826/88**

(43) Date of publication of application:
**20.09.89 Bulletin 89/38**

(45) Publication of the grant of the patent:
**02.02.94 Bulletin 94/05**

(84) Designated Contracting States:
**DE GB**

(56) References cited:
**EP-A- 0 047 549**
**EP-A- 0 232 878**
**EP-A- 0 270 151**
**EP-A- 0 276 988**
**US-A- 4 137 212**
**US-A- 4 373 049**
**US-A- 4 528 326**
**US-A- 4 728 463**

**CHEMICAL ABSTRACTS, vol. 105, no. 6, 1986, page 53, abstract no. 44099e & JP-A-6134058**

(73) Proprietor: **Asahi Kasei Kogyo Kabushiki Kaisha**
**2-6, Dojimahama 1-chome**
**Kita-ku**
**Osaka-shi Osaka 530(JP)**

(72) Inventor: **Nakahashi, Junichi**
**Hamayama Apartment 421, 4-1**
**Madorigaoka-2-chome Nobeoka-shi(JP)**
Inventor: **Natori, Itaru**
**Hamanishi Shinshataku 4-4, 2-1**
**Madorigaoka-2-chome Nobeoka-shi(JP)**

(74) Representative: **Blake, John Henry Francis et al**
**BROOKES AND MARTIN**
**High Holborn House**
**52/54 High Holborn**
**London WC1V 6SE (GB)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a flame-resistant polyamide resin composition comprising a flame retardant consisting of a brominated styrene or styrene derivative polymer having acid anhydride groups. Said composition is mainly used in electrical and electronic fields.

Polyamides, because of their high thermal resistance and mechanical characteristics, are successfully used in the electrical and electronic fields. In these fields, a high degree of flame resistance is required for resin materials by the UL Regulation of the United States. To make polyamides flame-resistant, there have been used nitrogen-containing flame retardants (e.g. melamine cyanurate), halogen-containing flame retardants (e.g. octachlorine adduct of cyclopentadiene, brominated polyphenylene ether, brominated polystyrene). Among these, melamine cyanurate is such a poor flame retardant that it is difficult to make glass fiber-containing compositions highly flame-resistant. Among the halogen-containing flame retardants, the former two are inferior in thermal stability to the brominated polystyrene. At the present time, brominated polystyrene is the best known flame retardant for rendering polyamides flame-resistant.

As to brominated polystyrene and flame-resistant compositions comprising polyamides and brominated polystyrene, there are known JP-A-51-47034, JP-A-51-47044, JP-A-57-53505, JP-A-61-34058, and US Patent Nos. 4,137,212 and 4,373,049.

Also, as examples of compositions which are not flame-resistant, but are superior in mechanical strength, these compositions which comprises a polyamide and a copolymer of styrene or a styrene derivative and an unsaturated carboxylic acid anhydride, are disclosed in JP-A-56-50931, JP-A-60-86162 and JP-A-60-19517. US 4,728,463 discloses the use as a fire retardant of a composition comprising a brominated styrene-maleate copolymer which contains in excess of 60 weight percent bromine.

It was found, however, that the polyamide compositions with brominated polystyrene as a flame retardant have a serious drawback in that thin molded products which are made of these compositions are inferior in strength at the weld portion. A connector, one of the important parts in the electrical and electronic fields, has a hole for pin insertion at the very weld portion. When the weld strength of the material is low, there occurs a problem that cracks are produced when a pin is forced into the hole.

As a result of an extensive study the present inventors have solved the foregoing problem by using as a flame retardant a brominated styrene or styrene derivative polymer having from 0.1 to 20 mole% of acid anhydride groups, in which the bromine content is from 50 to 80 wt.%.

More particularly, the present invention relates to a flame-resistant polyamide resin composition comprising components:

(A) A polyamide selected from the group consisting of nylon-6,6; nylon-6; a copolymer of nylon-6,6 and nylon-6, a blend of nylon-6,6 and nylon-6, a copolymer of nylon-6T and nylon-6,6; and a terpolymer of nylon-6T, nylon-6,6 and nylon-6,12;

(B) a flame retardant consisting of a brominated styrene or styrene derivative polymer having from 0.1 to 20 mole% of acid anhydride groups, in which the bromine content is from 50 to 80 wt.%; and

(C) a flame retardant consisting of a brominated polystyrene, in which the bromine content is from 50 to 80 wt.%;

said components satisfying the following conditions:

$$a + b + c = 100$$
$$0.5 \leqq b \leqq 35$$
$$0 < c \leqq 34.5$$
$$5 \leqq b + c \leqq 35$$
$$0.1 \leqq \alpha \leqq 20$$
$$14 \leqq b \times 0.01x + c \times 0.01y \leqq 20$$

wherein a, b and c represent the amounts in wt.% of components (A), (B) and (C), respectively, x and y represent the bromine contents in wt.% of components (B) and (C), respectively, and $\alpha$ represents the total content in mole% of the acid anhydride groups of components (B) and (C).

BRIEF DESCRIPTION OF THE DRAWINGS

Fig. 1 is a plan view of a mold for preparing test pieces used in the examples of the present invention:

1 Weld portion
2 Sprue
3 Runner

4 Test piece

Fig. 2 shows an infrared spectrum of the flame retardant of the present invention obtained in the production examples.

Fig. 3 shows an infrared spectrum of the brominated polystyrene.

DETAILED DESCRIPTION OF THE PREFERRED EMBODIMENTS

The present invention will be illustrated below in detail.

The polyamide, a matrix, of the present invention is a linear polymer having amide bonds, and is obtained by means of three methods: Polycondensation of an organic diamine with an organic dicarboxylic acid, polycondensation of an aminocaproic acid and ring-opening polymerization of a lactam. The polyamides are selected from nylon-6,6, nylon-6, copolymers of nylon-6,6 and nylon-6, blends of nylon-6,6 and nylon-6, copolymers of nylon-6T and nylon-6,6 (T means terephthalic acid), terpolymers of nylon-6T, nylon-6,6 and nylon- 6,12.

The flame retardant of the present invention, i.e., component (B), a brominated styrene or styrene derivative polymer having from 0.1 to 20 mole% of acid anhydride groups, in which the bromine content is from 50 to 80 wt.%, is obtained by brominating a copolymer of an unsaturated compound, such as styrene, $\alpha$-methylstyrene, p-methylstyrene, and is represented by formula (1):

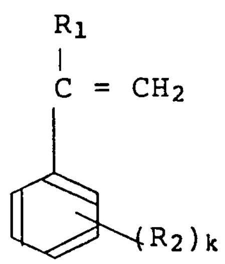

(1)

wherein R1 and R2, which may be the same or different, each represent a hydrogen atom or an alkyl group having from 1 to 3 carbon atoms, and k represents an integer of from 1 to 5,
and an unsaturated compound having an acid anhydride group, for example an $\alpha,\beta$-unsaturated dicarboxylic acid anhydride (e.g. maleic acid anhydride, citraconic acid anhydride), the content of the acid anhydride groups of said copolymer being limited to a range of from 0.1 to 20 mole%, so that the bromine content will be from 50 to 80 wt.%. The method of copolymerization may be any of the method of random copolymerization, block copolymerization, alternating copolymerization. Alternatively, the brominated polymer of component (B) may be formed by a method in which said unsaturated compound having an acid anhydride group is reacted with a brominated styrene or styrene derivative polymer.

The introduction of bromine may be carried out by any of the following methods : A previously brominated unsaturated compound represented by formula (1) is used in the polymerization; a compound having no bromine represented by formula (1) is polymerized and brominated, after which an unsaturated compound having an acid anhydride group is added to and reacted with the resulting brominated polymer; an unsaturated compound having no bromine represented by formula (1) is copolymerized with an unsaturated compound having an acid anhydride group, after which the resulting copolymer is brominated; and the compound represented by formula is firstly polymerized, then the unsaturated compound having an acid anhydride group reacts with the thus polymerized compound, and thereafter the resulting product is brominated.

The molecular weight of the brominated polymer of component (B) may be from several thousand to several hundred thousand. A molecular weight which is too low is not preferred in terms of thermal resistance, and a molecular weight which is too high is also not preferred because this would result in the melt viscosity becoming too high. The bromine content is from 50 to 80 wt.%. When the bromine content is too low, it could be necessary to add a large amount of this polymer to the polyamide in order for a high degree of flame resistance to be obtained, which would result in the deterioration of the mechanical properties. A bromine content which is too high would make the thermal resistance unstable.

The amount of acid anhydride groups contained in the brominated polymer of component (B) is from 0.1 to 20 mole%. When the amount is too small, the compatibility of the polymer with the polyamide is not present, and as a result, the weld strength is occasionally not sufficiently improved and the flame resistance is not sufficiently developed. A content of acid anhydride groups which is too high would cause decomposition of the polyamide on being mixed therewith.

The mole% referred to herein, which is a unit of the amount of the acid anhydride group, is expressed in terms of the monomer content of the styrene or styrene derivative polymer. For example, in the case of a copolymer of styrene and maleic acid anhydride, the mole% is a value obtained by dividing the number of moles of maleic acid anhydride by the total number of moles of styrene or styrene derivative and maleic acid anhydride and multiplying the resulting quotient by 100. In the case of the addition product of a brominated polystyrene with maleic acid anhydride, the mole% is a value obtained by dividing the number of moles of maleic acid anhydride by the total number of moles of styrene and maleic acid anhydride and multiplying the resulting quotient by 100.

As a method by which the acid anhydride groups are incorporated into the brominated polymer of component (B), the method which comprises adding the groups to a brominated polystyrene is more preferable than a method which comprises incorporating the groups into the polymer chain. When employing the former method, the product obtained, when used in a flame-resistant polyamide resin composition, characterises the composition with good thermal stability, and the elongation of the weld portion of the molded products which are made of the composition is large.

One example of a method for producing the brominated polymer of component (B) of the addition product will be illustrated below using maleic acid anhydride as an example of the compound which provides the acid anhydride group.

A method is preferred in which brominated polystyrene is reacted with maleic acid anhydride in an aromatic organic solvent using benzoyl peroxide in an amount of from 0.01 to 0.5 mole based on 1 mole of the monomer unit in the brominated polystyrene.

The brominated polystyrene, is a known compound, and may be produced by any of the conventionally known methods. For example, JP-A-57-53505 discloses a method for brominating polystyrene.

What is essential to the aromatic organic solvent is that it is a solvent which is common to the compound of formula (1) and maleic acid anhydride. Particularly, solvents having a relatively high boiling point are preferred, and solvents which are not susceptible to the chain transfer reaction are more preferable. Specific examples of such solvents include aromatic halogen compounds and their derivatives. Particularly, o-dichlorobenzene is preferably used.

The amount of benzoyl peroxide used in this reaction is in the range of from 0.01 to 0.5 mole, preferably from 0.05 to 0.4 mole based on 1 mole of the monomer unit in the brominated polystyrene. When the amount is little, a sufficient amount of the maleic acid anhydride group cannot be introduced. When the amount is extremely large, undesirable phenomena such as decomposition, foaming and coloration of the brominated polystyrene would result.

Also, peroxides which are more stable than benzoyl peroxide, for example dicumyl peroxide, di-tert-butyl peroxide, 1,1-bis(tert-butylperoxy)-3,3,5-trimethylcyclohexane, 2,5-dimethyl-di(tert-butylperoxy)hexane, may be used. However, since introduction of maleic acid anhydride into brominated polystyrene is more difficult than its introduction into styrene, when the introduction of a sufficient amount of maleic acid anhydride is desired, the addition of an extremely large amount of the peroxide becomes necessary. Industrially, this is very disadvantageous.

In the present invention, the reaction temperature is from 0° to 300°C, preferably from 60° to 150°C. When this reaction temperature is raised to an excess, foaming and decomposition would occur and desirable results would not be obtained. Whereas when the reaction temperature is lowered to an excess, the reaction will not proceed sufficiently and the desired object cannot be attained. Generally, the reaction time is from 5 minutes to 20 hours, preferably from about 1 to about 9 hours. The pressure is not particularly limited, but it is generally convenient to carry out the reaction under normal pressure.

The brominated polystyrene of component (C), in which the bromine content is from 50 to 80 wt.%, is used in the composition of the present invention and is a polymer of styrene, containing from 50 to 80 wt.% of bromine. When the bromine content is low, the flame-resistant efficiency per amount of the brominated polymer of component (C) added decreases, so that it is necessary to increase the added amount, which leads to reduction in the mechanical properties. When the bromine content is too high, the polymer becomes thermally unstable.

The amounts of components (A), (B) and (C) of the present invention, are weight percentages a, b and c, respectively, and are expressed by the following equations :

$a + b + c = 100$
$0.5 \leqq b \leqq 35$
$0 < c \leqq 34.5$
$5 \leqq b + c \leqq 35$

$0.1 \leqq \alpha \leqq 20$
$14 \leqq b \times 0.01x + c \times 0.01y \leqq 20$

wherein x and y represent the bromine contents in wt.% of components (B) and (C), respectively, and $\alpha$ represents the total content in mole% of the acid anhydride groups of components (B) and (C).

When (B) and (C) are used together and b is less than 0.5, sufficient affinity to the polyamide is not obtained, and when (B) is used alone, the flame resistance is poor. A preferred b is 5 or more. To increase b to larger than 35 is not only impractical because the flame resistance has already reached a sufficiently high level in the range specified above, but would also lead to a reduction in the mechanical properties of the polyamide.

When the amount of component (C), c exceeds 34.5, the mechanical properties and weld strength become poor. A preferred c is 30 or less.

The sum of b and c being 5 or more is needed. When said sum is less than 5, the flame resistance is poor. Also, the sum is preferably not larger than 35, because the flame resistance would have already reached a sufficiently high level before the sum has reached 35, so that a further increase in the sum is not economical and impractical. Further, when the sum is more than 35, the mechanical properties and weld strength lowered.

The value of $\alpha$ is not less than 0.1 and not more than 20.

This value determines the compatibility of polyamide with the flame retardant components (B) and (C). The weld strength is determined by the amount of the flame retardants present in the polyamide resin composition and compatibility of these flame retardants with the polyamide. As the amount, (b + c), decreases, the weld strength increases. If the compatibility of the polyamide with the flame retardants (B and C) is high, the weld strength also increases. The compatibility of the polyamide with the flame retardants improves as the value of $\alpha$ increases. When $\alpha$ is less than 0.1, the compatibility is poor and the weld strength weakens. When $\alpha$ is so large as to exceed 20, occasionally the acid groups will cause the polyamide to decompose, thus resulting in problems such as a reduction in the extrusion processability and mechanical properties, color change. Accordingly, the value of $\alpha$ is not to exceed 20. A preferred $\alpha$ is 10 or less. The increasing value of b/c becomes favorable to the weld strength, and b/c is preferably not less than 0.5.

The value of $\alpha$ affects both the strength and elongation of the weld portion, and the elongation increases as $\alpha$ increases. The elongation of the weld portion, as in the case of strength thereof, is a very important physical property in preventing the connector from cracking when a pin is forced into the connector. This is because, when the elongation is low, the connector cracks by a slight spread at the weld portion when a pin is forced into the connector. If the elongation of the weld portion is 5% or more, the results obtained are good. The elongation of the weld portion is preferably 8% or more, and more preferably 10% or more. The value of $\alpha$ is preferably 1.5 or more, and more preferably 2.2 or more.

Further, the value of an equation, $b \times 0.01x + c \times 0.01y$, which expresses the bromine content based on the polymer components is not less than 14 and not more than 20. When the value is less than 14, the flame resistance is poor. When it is not less than 14 and not more than 20, the flame resistance is good, and a value of more than 20, lowers the mechanical properties and weld strength.

The compositions of the present invention may contain a metal oxide as an auxiliary flame retardant. Such retardants include antimony trioxide, antimony pentoxide, sodium antimonate, zinc oxide, iron oxide, tin oxide, calcium oxide, copper oxide, titanium oxide, aluminum oxide. Zinc borate is also known as an effective auxiliary flame retardant. Among these, antimony trioxide is the most effective auxiliary flame retardant. The amount of these retardants blended is from 0 to 15 parts by weight, preferably 5 parts by weight or less based on 100 parts by weight of the total amount of components (A), (B) and (C).

Particularly, in order to obtain a high degree of flame resistance, for example, enough to pass the V-0 Standards of the UL Regulations in the United States at a thickness of 0.8 mm, 1 part by weight of the auxiliary flame retardant is usually necessary. On the other hand, however, these auxiliary flame retardants lower the strength of the weld portion and tensile strength to the same degree as or more severely than brominated polystyrene. Consequently, the amount of the auxiliary flame retardants should be confined to a necessary minimum.

The brominated polystyrene containing the acid anhydride groups of the present invention, when added to polyamides, provides a higher flame resistance than the common brominated polystyrene. Accordingly, the amount of antimony trioxide, an auxiliary flame retardant, can be decreased.

The compositions of the present invention may also contain glass fibers, metallic fibers, inorganic fibers, organic fibers, inorganic fillers. As described above, parts in electrical and electronic fields show an increasingly strong tendency to become light, thin, short and small, so that parts which have been

reinforced with glass fibers are popularly used. The amount of these fibers and fillers blended as from 5 to 100 parts by weight based on 100 parts by weight of the total amount of components (A), (B) and (C) and, if necessary, the auxiliary flame retardant.

The compositions of the present invention, may also contain the known additives for polyamides or styrene or styrene derivative resins. As examples of these additives, there are mentioned thermal stabilizers such as copper compounds, alkali metal halides, hindered phenol compounds, hindered amine compounds; lubricants or mold release agents such as metal stearates, metal montanates, ethylene bis-stearylamide, methylene bis-stearylamide, montanic acid esters, polyethylene glycol, mineral oils; and coloring agents (e.g. dyes, pigments), plasticizers, ultraviolet ray absorbers, antistatic agents, reinforcing agents.

In producing the compositions of the present invention, it is important to knead the components well. If possible, it is desirable to use a high-performance kneading type twin-screw extruder. Examples of this extruder include ZSK (produced by Wellner Frydiller, Inc.), PCM (produced by Ikegai Iron Works, Ltd.). For feeding glass fibers and inorganic fillers, the side-feed method is preferred. Otherwise, occasionally, the surface treating agents which are used for glass fibers and inorganic fillers react with an $\alpha,\beta$-unsaturated dicarboxylic acid anhydride to produce undesirable results.

The compositions of the present invention have a high degree of flame resistance and provide high strength and elongation of the weld portion, so that they are very useful as a material for parts used in the electronic and electrical fields. Further, the compositions have a good thermal stability, so that productivity at the time of extrusion or molding is high, and further the molded products have a good surface state and no color change.

EXAMPLES

The effect of the present invention will be illustrated more specifically with reference to the following examples.

First, materials, preparation of test pieces and testing methods used in the examples and comparative examples will be shown.

1. Materials

(1) Polyamide

Ny 66 : Nylon-6,6 [Relative viscosity in sulfuric acid (JIS-K-6810) 2.85]

Ny 6T66 : Nylon-6,6/nylon-6T (66/34) copolymer [Relative viscosity in sulfuric acid (JIS-K-6810) 2.45]

(2) Brominated polystyrene

BrPS : Brominated polystyrene having a bromine content of 68 wt.% (Pyrocheck (Registered trade mark) 68PB, produced by Ferro Corp.).

(3) Metal oxide

$Sb_2O_3$ : Antimony trioxide (PATOX-C (Registered trade mark), produced by Nippon Seiko K.K.)

(4) Glass fiber

GF : Glass fiber (MA-416, produced by Asahi Fiber Glass Co., Ltd).

(5) Brominated product of a copolymer of an aromatic vinyl compound with an $\alpha,\beta$-unsaturated dicarboxylic acid anhydride

BrSMAC-1 : Brominated product of a styrene/maleic acid anhydride (90.5 mole% : 9.5 mole%) copolymer (Dailark 232 (Registered trade mark), produced by Sekisui Plastics Co., Ltd.); bromine content, 65 wt.%.

BrSMAC-2 : Brominated product of a styrene/maleic acid anhydride (84.2 mole% : 15.8 mole%) copolymer (Dailark 32 (Registered trade mark), produced by Sekisui Plastics Co., Ltd.); bromine content, 62 wt.%.

(6) Maleic acid anhydride adduct of brominated polystyrene MBrPS : 52.5 Grams of brominated polystyrene (BrPS), 53.9 g of maleic acid anhydride and 15.4 g of 2,5-dimethyl-2,5-di(tert-butylperoxy)-hexane (Perhexa 25B (Registered trade mark), produced by Nippon Oils & Fats Co., Ltd.) were dissolved in 500 ml of o-dichlorobenzene, and reacted at 130°C for 5 hours under a nitrogen gas stream. After completion of the reaction, the reaction solution was poured into methanol to precipitate a polymer. This polymer was collected by filtration, washed with a large amount of methanol and dried at 65°C under a nitrogen gas stream to obtain a maleic acid anhydride adduct of brominated polystyrene. The addition rate of maleic acid anhydride was 1.7 mole%.

(7) Styrene/maleic acid anhydride copolymer

SMAC-2 : Styrene/maleic acid anhydride (84.2 mole % : 15. 8 mole%) copolymer (Dailark 332

(Registered trade mark), produced by Sekisui Plastics Co., Ltd.).
(8) Polystyrene
PS : Polystyrene having a molecular weight of from 160,000 to 180,000 (produced by Walko Junyaku Co., Ltd.).

2. Preparation of test pieces

Required amount of the materials were blended in a tumbler-type blender and melt-kneaded on an extruder to prepare strands. After cooling with water, the strands were formed into pellets by means of a cutter. The extruder used was PCM 45 (same direction rotation) having screws of 45 mm in diameter produced by Ikegai Iron Works, Ltd. The glass fiber was fed by the side-feed method.

The pellets thus obtained were molded on an injection molding machine (N-70B II, produced by Japan Steel Works, Ltd.) to prepare test pieces.

3. Testing method

(1) Thin-plate tensile characteristics of weld portion

Molded pieces were prepared using a mold, shown in Fig. 1, having a form of 127 mm in length (a in Fig. 1), 12.7 mm in width (b in Fig. 1) and 0.8 mm in thickness which was made so that a molten resin may flow into the mold at the both ends and form a weld portion 1 at the central portion. The molded pieces were tested according to the tensile testing method of ASTM-D-638 to measure the tensile strength and tensile elongation. In Fig. 1, 2 is a sprue, 3 is a runner and 4 is a test piece.

(2) Tensile characteristics of normal portion

Tested according to ASTM-D-638.

(3) Flame resistance

According to the estimating method described in the V-O Standards of the UL-94 Regulations, ten test pieces were brought into contact with a flame twice for each test piece, 20 times in total. The average and maximum burning times at that time were examined, and also the number of test pieces which dripped by melting and caused absorbent cotton to catch fire was counted.

(4) Compatibility

The test pieces were frozen in a liquid nitrogen and broken to pieces, and the broken surface was observed by means of a scanning electron microscope to measure the maximum particle diameter ($\mu$m) of the flame retardant particles dispersed in the nylon matrix. The compatibility was evaluated by this maximum particle diameter. The smaller the maximum particle diameter, the better the compatibility.

Examples 1 to 10 and Comparative examples 1 to 3

Nylon-6,6 is blended with BrPS, BrSMAC, $Sb_2O_3$ and GF in proportions shown in Table 1. Each blend is melt-kneaded and extruded on twin-screw extruders, PCM 45 and PCM 30 (produced by Ikegai Iron Works, Ltd.), and pelletized. The pellets are injection-molded and evaluated. The results are shown in Table 1.

The systems with BrPS only as a flame retardant show that, whether GF is used or not, the weld strength is low, the flame resistance is poor and whitening is observable on the surface of the molded product (Comparative examples 1, 2, 3). On the other hand, the systems with BrSMAC-1, BrSMAC-2 and prove to have been improved in the drawbacks above (Examples 1 to 10).

The GF-containing products, as compared with the GF-free ones, are relatively low in the strength and elongation of the weld portion, but high in the strength of the normal portion. Consequently, they have an advantage that molded products can be designed in a small thickness.

Table 1

| Item | Composition | | | | | | | |
|---|---|---|---|---|---|---|---|---|
| | Ny 66 | GF | BrPS | Br-SMAC-1 | Br-SMAC-2 | $Sb_2O_3$ | a | Bromine content * |
| Unit | wt. % | | | | | | mole % | wt. % |
| Example 1 | 60 | 15 | 5.5 | 16.5 | | 3 | 7.3 | 17.6 |
| " 2 | 60 | 15 | 11 | 11 | | 3 | 5.0 | 17.8 |
| " 3 | 60 | 15 | 16.5 | 5.5 | | 3 | 2.6 | 18.0 |
| " 4 | 60 | 15 | 17.6 | 4.4 | | 3 | 2.1 | 18.1 |
| " 5 | 60 | 15 | 19.8 | 2.2 | | 3 | 1.0 | 18.2 |
| Comparative example 1 | 60 | 15 | 22 | | | 3 | 0 | 18.2 |
| " 2 | 53 | 15 | 24 | | | 8 | 0 | 21.2 |
| Example 6 | 60 | 15 | 17 | | 5 | 3 | 4.0 | 17.9 |
| " 7 | 75 | | | 22 | | 3 | 9.5 | 14.7 |
| " 8 | 75 | | 5.5 | 16.5 | | 3 | 7.3 | 14.9 |
| " 9 | 75 | | 11 | 11 | | 3 | 5.0 | 15.1 |
| " 10 | 75 | | 16.5 | 5.5 | | 3 | 2.6 | 15.3 |
| Comparative example 3 | 75 | | 22 | | | 3 | 0 | 15.4 |

- Cont'd -

* Bromine content Z = b x 0.01X + c x 0.01Y

Table 1 (Cont'd)

| Weld portion | | Normal portion | | Flame resistance | | |
|---|---|---|---|---|---|---|
| Tensile strength | Tensile elongation | Tensile strength | Tensile elongation | Burning time | | Number of pieces of absorbent cotton which caught fire |
| | | | | Maximum | Average | |
| $kg/cm^2$ | % | $kg/cm^2$ | % | sec | sec | piece |
| 763 | 5.3 | 1280 | 6.5 | 1.0 | 1.0 | 0 |
| 790 | 5.4 | 1300 | 6.6 | 2.0 | 1.2 | 0 |
| 810 | 5.5 | 1320 | 6.7 | 2.2 | 1.3 | 0 |
| 840 | 5.6 | 1330 | 6.8 | 2.2 | 1.4 | 0 |
| 890 | 5.9 | 1340 | 6.8 | 2.3 | 1.3 | 0 |
| 677 | 5.2 | 1402 | 7.2 | 7.0 | 3.2 | 6 |
| 390 | 2.9 | 1210 | 6.2 | 2.0 | 1.0 | 1 |
| 765 | 5.4 | 1280 | 6.4 | 3.6 | 1.2 | 0 |
| 827 | 12.7 | 840 | 6.7 | 1.0 | 1.0 | 0 |
| 790 | 13.0 | 865 | 7.4 | 1.0 | 1.0 | 0 |
| 755 | 12.9 | 875 | 7.9 | 2.0 | 1.1 | 1 |
| 799 | 14 | 875 | 7.9 | 1.0 | 1.0 | 1 |
| 480 | 4.9 | 870 | 7.8 | 13 | 4.4 | 10 |

- Cont'd -

Table 1 (Cont'd)

| Appearance of the surface of molded product |
|---|
| |
| Whitening |
| Whitening |
| |
| Whitening |
| |

Comparative examples 4 and 5

In the same manner as in Examples 1 to 10, blends having a composition shown in Table 2 are prepared, and the tensile strength and tensile elongation of the weld portion are evaluated.

From these results and the result of Comparative example 1, the following are found :

When the blend of polyamide and a styrene/maleic acid anhydride copolymer is used, the strength and elongation of the weld portion are low as compared with the blend of polystyrene and polyamide; on the other hand, when the blend of polyamide and the brominated product of a styrene/maleic acid anhydride copolymer is used, the strength and elongation of the weld portion improves as compared with the blend of polyamide and brominated polystyrene.

Table 2

| Unit | Composition | | | | | Weld portion | |
|---|---|---|---|---|---|---|---|
| | Ny 66 | GF | SMAC-2 | PS | $Sb_2O_3$ | Tensile strength | tensile elongation |
| | wt.% | | | | | $kg/cm^2$ | % |
| Comparative example 4 | 60 | 15 | 22 | | 3 | 320 | 2.4 |
| Comparative example 5 | 60 | 15 | | 22 | 3 | 460 | 3.6 |

Reference example 1

1.0 Gram of hydroxyapatite, $3Ca_3(PO_4)_2 \cdot Ca(OH)_2$, and 0.008 g of sodium oleate are suspended in distilled water. Thereafter, a mixed solution of 0.07 g of benzoyl peroxide, 40 g of tribromo-styrene and 4 g of acrylonitrile is added to carry out the reaction at 90 °C for 20 hours. The resulting polymer is collected by filtration, washed with hot water and dried.

Example 11 and Comparative examples 8 and 9

(1) A blended composition of polyamide, brominated polystyrene, a styrene/maleic acid anhydride copolymer and antimony trioxide,
(2) a blended composition of polyamide, brominated polystyrene to which maleic acid anhydride has grafted, and antimony trioxide, and
(3) a blended composition of polyamide, brominated polystyrene, a brominated product of a styrene/maleic acid anhydride copolymer and antimony trioxide,

are evaluated for thermal stability. This evaluation is carried out using a thermogravimetric apparatus (TGA) as follows:
Each blended composition is kept at 290°C for 1 hour under a nitrogen gas stream to measure a weight reduction percentage. The results are shown in Table 4.

These results suggest that the compositions of the present invention used in Example 11, as compared with ones used in Comparative examples 8 and 9, are low in thermo-weight reduction, so that they have good production stability and processability. In fact, with the composition used in Comparative example 9, the frequency of rope breaking at extrusion processing is 1 per 20 minutes, but with the compositions used in Example 11 the extrusion processing is stable over more than 2 hours.

Table 4

| | Composition | | | | | | | Thermo-weight reduction percentage (TGA) |
|---|---|---|---|---|---|---|---|---|
| | Ny 66 | MBrPS | BrSMAC-2 | BrPS | SMAC-2 | $Sb_2O_3$ | GF | |
| | wt.% | | | | | | | wt.% |
| Comparative example 8 | 73 | | | 22 | 2 | 3 | | 14.3 |
| Comparative example 9 | 58 | | | 22 | 2 | 3 | 15 | 15.2 |
| Example 11 | Composition of Example 5 | | | | | | | 10.2 |

Examples 12 to 13

Using Ny 6T66 as a base polyamide, compositions having a composition shown in Table 6 are prepared and evaluated in the same manner as in Example 1. The results are shown in Table 6. These results show that the same high weld strength and weld elongation and the same excellent flame resistance

as in the use of Ny 66 can be obtained. In this experiment, 0.5 part by weight of 4,4'-butylidenebis(3-methyl-6-tert-butylphenol) is added as a thermal stabilizer.

Table 6

| Item | Composition | | | | | | | |
|---|---|---|---|---|---|---|---|---|
| | Ny 6T66 | GF | BrPS | MBrPS | Br-SMAC-1 | $Sb_2O_3$ | α | Bromine content * |
| Unit | wt. % | | | | | | mole % | wt. % |
| Example 12 | 75 | | 19.8 | | 2.2 | 3 | 1.0 | 14.7 |
| " 13 | 60 | 15 | 19.8 | | 2.2 | 3 | 1.0 | 18.2 |

* Same as defined in Remarks for Table 1.

- Cont'd -

Table 6 (Cont'd)

| | Weld portion | | Normal portion | | Flame resistance | | |
|---|---|---|---|---|---|---|---|
| | | | | | Burning time | | |
| | Tensile strength | Tensile elongation | Tensile strength | Tensile elongation | Maximum | Average | Number of pieces of absorbent cotton which caught fire |
| | $kg/cm^2$ | % | $kg/cm^2$ | % | sec | sec | piece |
| | 870 | 6.1 | 790 | 7 | 1 | 0.3 | 0 |
| | 890 | 5.9 | 1230 | 6 | 1 | 0.5 | 0 |

Examples 14 and 15

Using Ny46 [Relative viscosity in sulfuric acid (JIS-K-6810): 3.57] and Ny6T 66 612 [Ny6T : Ny66 : Ny612 = 40 : 55 : 5, Relative viscosity in sulfuric acid (JIS-K-6810): 2.67] as a base polymer, compositions

shown in Table 7 were extruded, pelletized and evaluated in the same manner as in Example 1.

The results are shown in Table 7, with each showing excellent characteristics.

Table 7

| Item | Composition | | | | | | | | |
|---|---|---|---|---|---|---|---|---|---|
| | Ny 46 | Ny 66 6T 612 | GF | BrPS | MBrPS | Br-SMAC-1 | $Sb_2O_3$ | α | Bromine content * |
| Unit | wt. % | | | | | | | | |
| Example 14 | 60 | | 15 | 19.8 | | 2.2 | 3 | 1.0 | 18.2 |
| " 15 | | 60 | 15 | 19.8 | | 2.2 | 3 | 1.0 | 18.2 |

* Same as defined in Remarks for Table 1.

- Cont'd -

Table 7 (Cont'd)

| | Weld portion | | Normal portion | | Flame resistance | | |
|---|---|---|---|---|---|---|---|
| | | | | | Burning time | | |
| | Tensile strength | Tensile elongation | Tensile strength | Tensile elongation | Maximum | Average | Number of pieces of absorbent cotton which caught fire |
| | $kg/cm^2$ | % | $kg/cm^2$ | % | sec | sec | piece |
| | 880 | 5.9 | 1210 | 6 | 1 | 0.4 | 0 |
| | 880 | 5.9 | 1200 | 6 | 1 | 0.4 | 0 |

## Claims

**1.** A flame-resistant polyamide resin composition comprising components:

(A) A polyamide selected from the group consisting of nylon-6,6; nylon-6; a copolymer of nylon-6,6 and nylon-6, a blend of nylon-6,6 and nylon-6, a copolymer of nylon-6T and nylon-6,6; and a

terpolymer of nylon-6T, nylon-6,6 and nylon-6,12;
(B) a flame retardant consisting of a brominated styrene or styrene derivative polymer having from 0.1 to 20 mole% of acid anhydride groups, in which the bromine content is from 50 to 80 wt.%; and
(C) a flame retardant consisting of a brominated polystyrene, in which the bromine content is from 50 to 80 wt.%;
said components satisfying the following conditions:

$a + b + c = 100$
$0.5 \leqq b \leqq 35$
$0 < c \leqq 34.5$
$5 \leqq b + c \leqq 35$
$0.1 \leqq \alpha \leqq 20$
$14 \leqq b \times 0.01x + c \times 0.01y \leqq 20$

wherein a, b and c represent the amounts in wt.% of components (A), (B) and (C), respectively, x and y represent the bromine contents in wt.% of components (B) and (C), respectively, and $\alpha$ represents the total content in mole% of the acid anhydride groups of components (B) and (C).

**2.** The flame-resistant polyamide resin composition according to Claim 1, wherein the component (B) is brominated styrene or styrene derivative polymer being reacted with an unsaturated compound having an anhydride acid group.

**3.** The flame-resistant polyamide resin composition according to Claim 1, or Claim 2 wherein $\alpha$ is 1.5 or more

**4.** The flame-resistant polyamide resin composition according to Claim 3, wherein $\alpha$ is 2.2 or more.

**5.** The flame-resistant polyamide resin composition according to any one of Claims 1 to 4, wherein the ratio of b to c is 0.5 or more.

**6.** The flame-resistant polyamide resin composition according to any preceding Claim which further comprises antimony trioxide as an auxiliary flame retardant.

**7.** The flame-resistant polyamide resin composition according to Claim 6, wherein the antimony trioxide is present in an amount of 5 parts by weight or less based on 100 parts by weight of the total amount of the components (A), (B) and (C).

**8.** An article molded from a polyamide composition as claimed in any one of Claims 1 to 7.

## Patentansprüche

**1.** Flammbeständige Polyamidharz-Zusammensetzung, die folgende Komponenten enthält :
(A) ein Polyamid, das aus der aus Nylon-6,6, Nylon-6, einem Copolymeren von Nylon-6,6 und Nylon-6, einem Gemisch aus Nylon-6,6 und Nylon-6, einem Copolymeren von Nylon-6T und Nylon-6,6 und einem Terpolymeren von Nylon-6T, Nylon-6,6 und Nylon-6,12 bestehenden Gruppe ausgewählt ist,
(B) ein flammhemmendes Mittel, bestehend aus einem bromierten Styrolpolymeren oder Styrolderivatpolymeren, das 0,1 bis 20 Mol.-% Säureanhydridgruppen enthält, wobei der Bromgehalt 50 bis 80 Gew.-% beträgt, und
(C) ein flammhemmendes Mittel, das aus einem bromierten Polystyrol besteht, wobei der Bromgehalt 50 bis 80 Gew.-% beträgt,
wobei diese Komponenten die folgenden Bedingungen erfüllen :

$a + b + c = 100$
$0.5 \leqq b \leqq 35$
$0 < c \leqq 34{,}5$
$5 \leqq b + c \leqq 35$
$0{,}1 \leqq \alpha \leqq 20$

$14 \leqq b \times 0,01x + c \times 0,01y \leqq 20$

worin a, b und c die Mengen in Gew.-% der Komponenten (A), (B) und (C) bedeuten, x und y den Bromgehalt in Gew.-% der Komponenten (B) und (C) bedeuten und $\alpha$ den Gesamtgehalt in Mol.-% der Säureanhydridgruppen von Komponenten (B) und (C) bedeutet.

**2.** Flammbeständige Polyamidharz-Zusammensetzung nach Anspruch 1, wobei Komponente (B) ein bromiertes Styrolpolymeres oder bromiertes Styrolderivatpolymeres ist, das mit einer ungesättigten Verbindung mit einer Säureanhydridgruppe umgesetzt worden ist.

**3.** Flammbeständige Polyamidharz-Zusammensetzung nach Anspruch 1 oder Anspruch 2, worin a 1,5 oder mehr ist.

**4.** Flammbeständige Polyamidharz-Zusammensetzung nach Anspruch 3, worin a 2,2 oder mehr ist.

**5.** Flammbeständige Polyamidharz-Zusammensetzung nach einem der Ansprüche 1 bis 4, worin das Verhältnis von b : c 0,5 oder mehr ist.

**6.** Flammbeständige Polyamidharz-Zusammensetzung nach einem der vorhergehenden Patentansprüche, die zusätzlich Antimontrioxid als Hilfs-Flammschutzmittel enthält.

**7.** Flammbeständige Polyamidharz-Zusammensetzung nach Anspruch 6, worin das Antimontrioxid in einer Menge von 5 Gew.-Teilen oder weniger, bezogen auf 100 Gew.-Teile der Gesamtmenge der Komponenten (A), (B) und (C) vorliegt.

**8.** Formkörper aus einer Polyamidzusammensetzung gemäß einem der Ansprüche 1 bis 7.

**Revendications**

**1.** Composition de résine de polyamide résistante à la flamme comprenant les composants :

(A) Un polyamide sélectionné dans le groupe constitué par le nyon-6,6; le nylon-6; un copolymère de nylon-6,6 et de nylon-6, un mélange de nylon-6,6 et de nylon-6, un copolymère de nylon-6T et de nylon-6,6; et un terpolymère de nylon-6T, de nylon-6,6 et de nylon-6,12;

(B) une préparation ignifuge constituée d'un styrène bromé ou d'un polymère bromé dérivé du styrène ayant de 0.1 à 20 % molaire de groupes anhydrides d'acide, dans lequel la proportion de brome est de 50 à 80 % en poids; et

(C) une préparation ignifuge constituée d'un polystyrène bromé dans lequel la proportion de brome est de 50 à 80 % en poids;

lesdits composants répondant aux conditions suivantes :

$a + b + c = 100$
$0,5 \leqq b \leqq 35$
$0 < c \leqq 34,5$
$5 \leqq b + c \leqq 35$
$0.1 \leqq \alpha \leqq 20$
$14 \leqq b \times 0,01x + c \times 0,01y \leqq 20$

où a, b et c représentment les quantités en % en poids des composants (A), (B) et (C), respectivement, x et y représentent les proportions de brome en % en poids des composants (B) et (C), respectivement, et $\alpha$ représente la proportion totale en % molaire des groupes anhydrides d'acide des composants (B) et (C).

**2.** Composition de résine de polyamide résistante à la flamme selon la revendication 1, dans laquelle le composant (B) est un styrène bromé ou un polymère bromé dérivé du styrène mis en réaction avec un composé insaturé ayant un groupe anhydride d'acide.

**3.** Composition de résine de polyamide résistante à la flamme selon la revendication 1, ou la revendication 2, dans laquelle a est 1,5 ou plus.

4. Composition de résine de polyamide résistante à la flamme selon la revendication 3, dans laquelle a est 2,2 ou plus.

5. Composition de résine de polyamide résistante à la flamme selon l'une quelconque des revendications 1 à 4, dans laquelle le rapport de b sur c est 0,5 ou plus.

6. Composition de résine de polyamide résistante à la flamme selon l'une quelconque des revendications précédentes, qui comprend en outre du trioxyde d'antimoine en tant que préparation ignifuge auxiliaire.

7. Composition de résine de polyamide résistante à la flamme selon la revendication 6, dans laquelle le trioxyde d'antimoine est présent dans une quantité de 5 parties en poids ou moins, sur la base de 100 parties en poids de la quantité totale des composants (A), (B) et (C).

8. Article moulé dans une composition de polyamide selon l'une quelconque des revendications 1 à 7.

F I G. 1

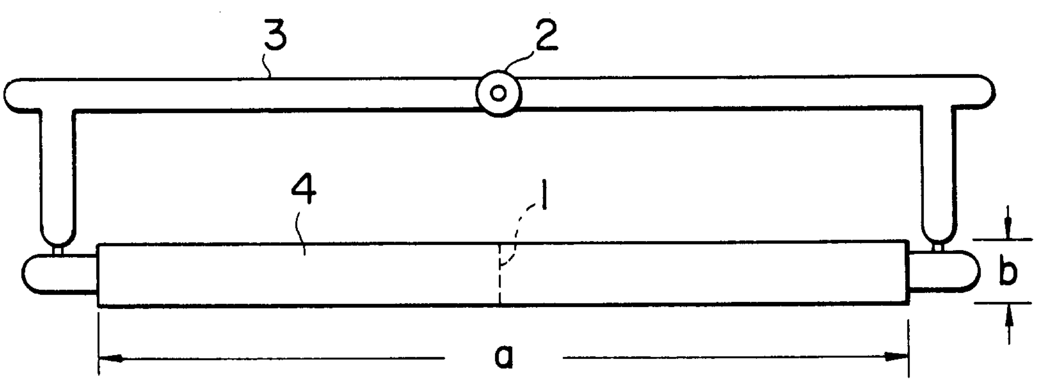

FIG. 2

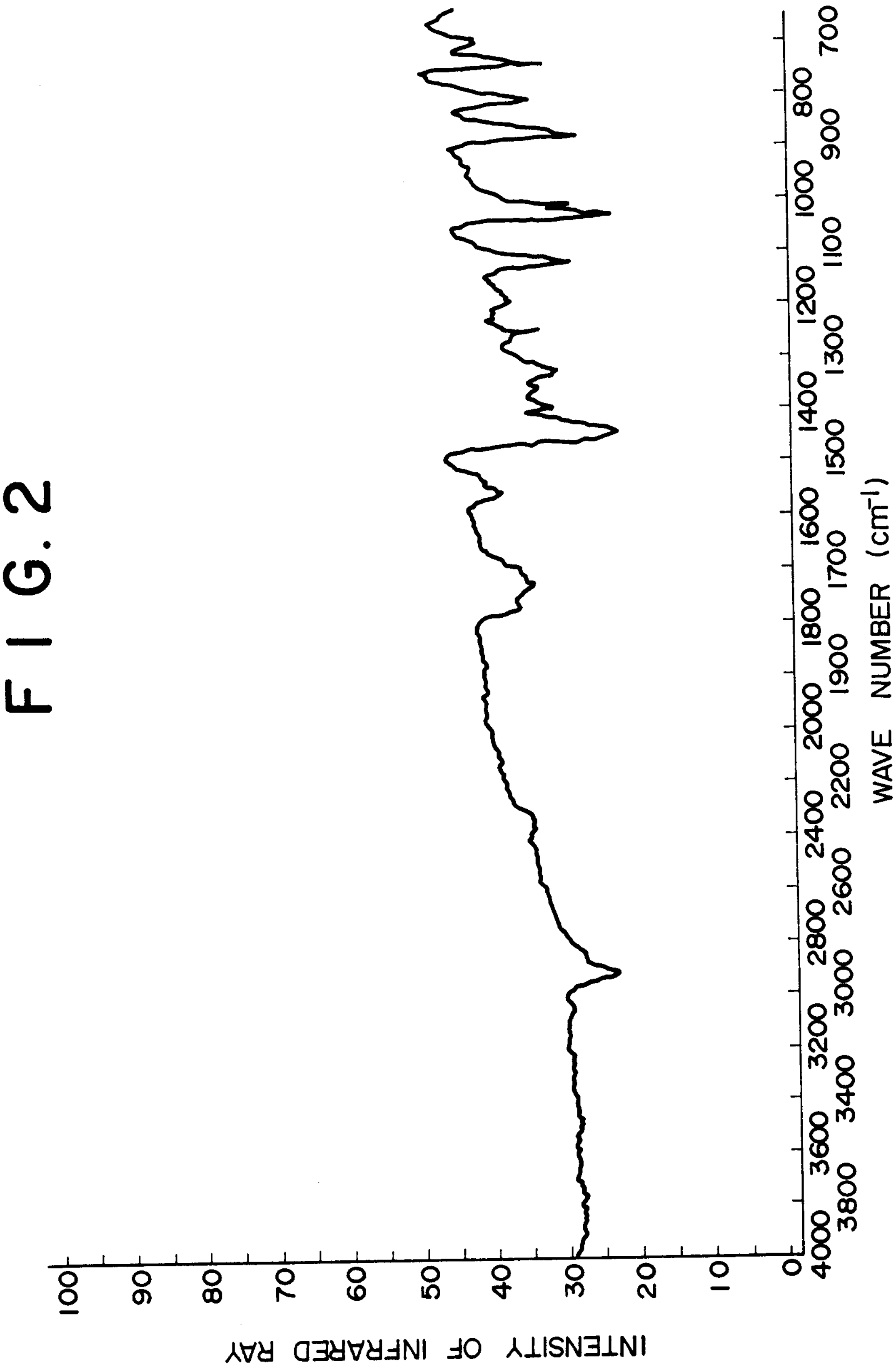
INTENSITY OF INFRARED RAY
100
90
80
70
60
50
40
30
20
10
0
4000
3800
3600
3400
3200
3000
2800
2600
2400
2200
2000
1900
1800
1700
1600
1500
1400
1300
1200
1100
1000
900
800
700
WAVE NUMBER (cm⁻¹)

FIG. 3

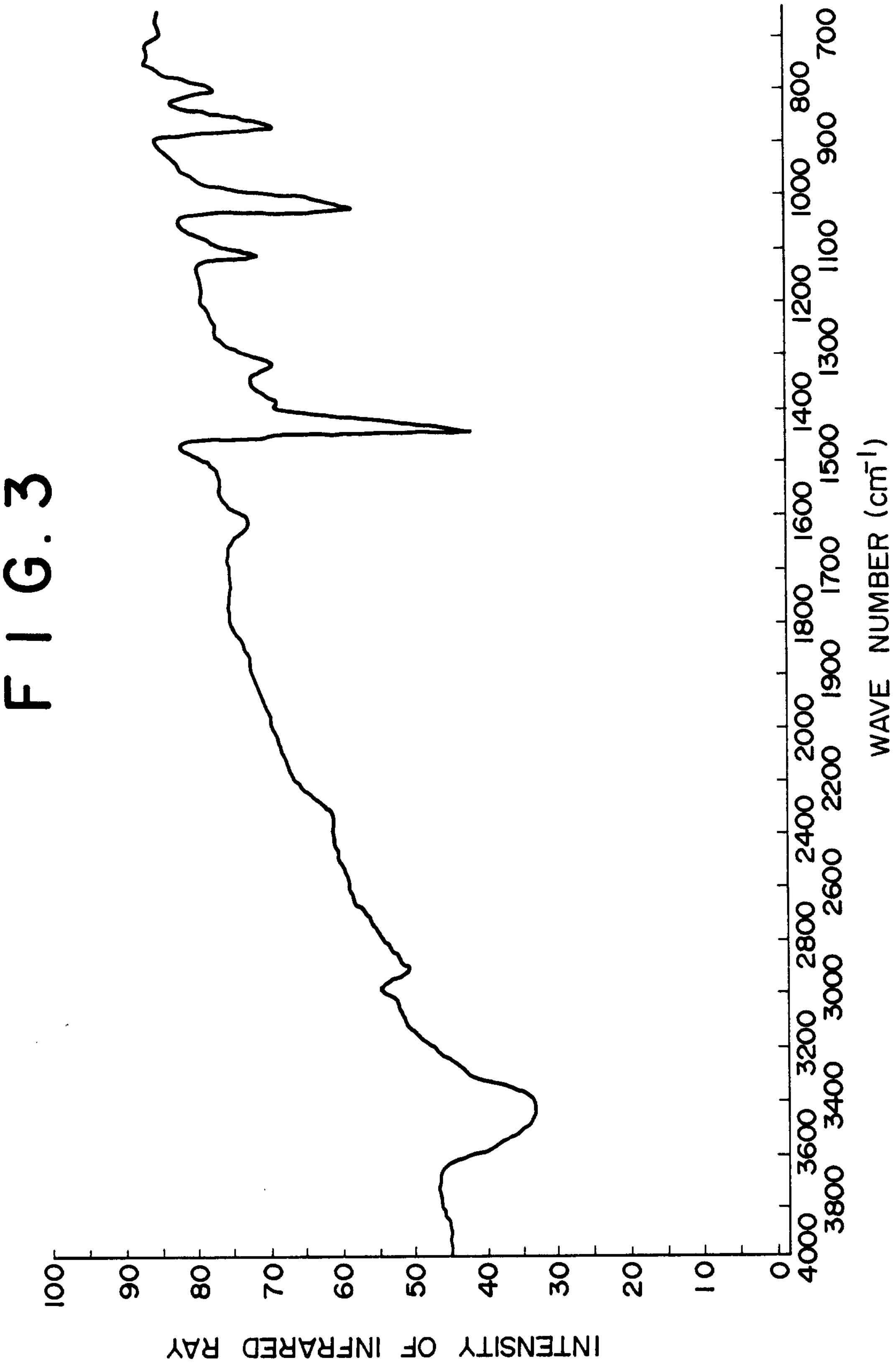
INTENSITY OF INFRARED RAY
0
10
20
30
40
50
60
70
80
90
100
WAVE NUMBER ($cm^{-1}$)
4000
3800
3600
3400
3200
3000
2800
2600
2400
2200
2000
1900
1800
1700
1600
1500
1400
1300
1200
1100
1000
900
800
700